# EUROPÄISCHE PATENTANMELDUNG

(11) **EP 1 739 589 A2**
(43) Veröffentlichungstag der Anmeldung: **03.01.2007**
(21) Anmeldenummer: 06012716.4
(22) Anmeldetag: 21.06.2006
(51) Int. Cl.: G06F 21/00

(54) **Ergänzungskarte für einen Rechner und Verfahren zum gesicherten Starten eines Rechners**

(30) Priorität: 22.06.2005 DE 102005029312; 30.08.2005 DE 102005041135
(71) Anmelder: Signal Computer GmbH, 30167 Hannover (DE)
(72) Erfinder: Aleali, Ehsan, D-30457 Hannover (DE); Gerwig, Frank, D-30890 Barsingahsusen (DE)
(74) Vertreter: Bremer, Ulrich

(57) **Zusammenfassung**

Die Erfindung betrifft eine Ergänzungskarte für einen Rechner (1), der mindestens eine Festplatte (2) und ein BIOS (8) zur Aufnahme eines Betriebssystems (10) aufweist,
wobei die Festplatte (2) durch ein Security-Feature geschützt ist, das Zugriffsbeschränkungen für die Anwendungsprogramme aufweist.

Erfindungsgemäß wird ein sicheres Starten des Rechners und einen sicheren Schutz gegenüber unzulässigen Benutzungen des Security-Feature-Sets der Festplatte gewährleistet,
indem auf der Ergänzungskarte (4) zumindest das User-Passwort (UP) und zumindest einige Security-Befehle des Security-Features gespeichert sind, die Ergänzungskarte (4) beim Starten des Rechners nach dem BIOS (8) und vor dem Betriebssystem (10) aufgerufen wird, und
die Ergänzungskarte (4) nach dem BIOS (8) Security-Befehle ausführt und mindestens einen Freeze-Befehl setzt, der Änderungen und/oder ein Setzen zumindest des User-Passwords (UP) durch das Betriebssystem (10) oder ein auf dem Betriebssystem laufendes Anwendungsprogramm verhindert.

Weiterhin ist ein Verfahren zum Starten des Rechners vorgesehen. Bei mehreren Festplatten werden vorzugsweise alle Festplatten entsprechend geschützt.

## Beschreibung

Die Erfindung betrifft eine Ergänzungskarte bzw. Steckkarte bzw. Erweiterungskarte für einen Rechner und ein Verfahren zum gesicherten Starten eines Rechners.

Einige Festplatten von Rechnern, insbesondere ATA- oder SATA- (IDE und Serial ATA) -Festplatten können über den ihren von dem Festplatten-controller verwalteten Datensatz - d.h. unterhalb der BIOS-Ebene - durch ein Passwort gesperrt werden. Die Passwörter sind Bestandteil eines Security-Feature-Sets der ATA-Spezifikation. Es sieht z. B. 32 Byte lange Kennwörter als User-Passwort und Master-Passwort vor. Letzteres ist als Zweitschlüssel gedacht, damit der Rechnerverwalter, z. B. in einem Unternehmen, die Festplatte ggf. noch retten kann, wenn der Anwender sein User-Passwort vergessen hat. Beide Passwörter lassen sich unabhängig voneinander auf beliebige Byte-Folgen setzen.

Der Schutz der Festplatte wird aktiviert, indem mit dem ATA-Befehl SECURITY SET - Passwort ein User-Passwort gesetzt wird. Hieraufhin bleibt die Platte zunächst normal benutzbar, ist jedoch nach dem nächsten Einschalten oder Hardware-Reset gesperrt. In diesem Zustand erlaubt sie keinen Zugriff auf ihre Daten und akzeptiert nur einige wenige Kommandos, z. B. zum Abfragen auf Typenbezeichnung, Seriennummer usw. Das Kommando SECURITY UNLOCK, zusammen mit dem korrekten User-Passwort, entsperrt die Platte vorübergehend, so dass man normal hiermit arbeiten kann. Die Sicherheitsfunktion bleibt jedoch zunächst aktiviert, so dass die Festplatte nach dem nächsten Kaltstart automatisch wieder verriegelt ist. Durch das Kommando SECURITY DISABLE, zusammen mit dem korrekten Passwort, wird die Sperre dauerhaft abgeschaltet.

Um einen unberechtigten Zugriff auf das Sicherheits-Feature, insbesondere auch ein unberechtigtes Sperren der Festplatte durch Setzen oder Ändern eines User-Passworts, zu verhindern, ist der Befehl SECURITY FREEZE LOCK vorgesehen. Er friert die Sicherheitsstellungen bis zum nächsten Kaltstart ein, so dass die Festplatte insbesondere keine Passwortänderungen oder ein Setzen des Passwortes akzeptiert. Somit kann z. B. ein schadhaftes, selbstkopierendes Programm wie z. B. ein Virus, Wurm oder trojanisches Pferd, nicht unzulässigerweise derartige Befehle des Sicherheits-Feature-Sets vornehmen.

Die Funktionen des Security-Feature-Sets können insbesondere in dem BIOS verwendet werden, um einen Zugriff des Betriebssystems oder einer unter dem Betriebssystem durchgeführten Anwendung zu verhindern. Hierbei kann im BIOS eine Abfrage des Passworts vorgesehen sein, und/oder es können nach dem Entsperren der Platte bei Eingabe des richtigen User-Passworts vor dem Start des Betriebssystems die Sicherheitseinstellungen durch die FREEZE-Funktion eingefroren werden, damit der Passwortschutz sicher unter der Kontrolle des BIOS bleibt.

Die auf den Festplatten installierten BIOS (Basic Input Output System) nutzen diese Sicherheitsfunktion jedoch nicht durchgehend. Somit können insbesondere ATA und SATA-Festplatten bei unberechtigter Aktivierung des Sicherheits-Features Probleme hervorrufen. Wenn ein schadhaftes Programm das User-Passwort gesetzt hat und dem Benutzer das Master-Passwort nicht bekannt ist, können die Daten der Festplatte ggf. nur noch durch spezielle Behandlungsverfahren gerettet werden.

Die DE 102 52 265 A1 beschreibt eine Netzwerkkarte für einen Rechner mit einer Reset-Einrichtung zur Ausgabe eines Hard-Reset-Ausgangssignals, einer Restore-Schutzeinrichtung zum Wiederauffinden von Systemdateien und einem Busanschluss. Hierbei wird bei Aufnahme eines Wake-on-LAN-Eingangssignals ein Wake-on-LAN-Ausgangssignal an das Netzgerät des Rechners ausgegeben. Ein Hard-Reset-Ausgangssignal wird über eine Hard-Reset-Leitung an die rechnerinterne Einrichtung ausgegeben.

Der Erfindung liegt die Aufgabe zugrunde, Verbesserungen gegenüber dem Stand der Technik zu schaffen und insbesondere ein sicheres Starten des Rechners und einen sicheren Schutz gegenüber unzulässigen Benutzungen des Security-Feature-Sets der Festplatte gewährleisten.

Diese Aufgabe wird durch eine Ergänzungskarte bzw. Steckkarte nach Anspruch 1 sowie ein Verfahren nach Anspruch 16 gelöst. Die Unteransprüche beschreiben bevorzugte Weiterbildungen.

Erfindungsgemäß ist somit eine Ergänzungskarte bzw. Steckkarte vorgesehen, die direkt im Anschluss an das BIOS gestartet wird, d. h. in dem BIOS als bootfähiges Laufwerk eingestellt ist, und in der zumindest einige Befehle des Security-Feature-Sets, vorzugsweise sämtliche Security-Befehle, gespeichert sind. Die Ergänzungskarte führt hierbei Security-Funktionen auf der Festplatte durch, wobei zumindest der FREEZE-Modus gesetzt wird; gemäß einer bevorzugten Ausbildung wird weiterhin abgefragt, ob ein User-Passwort gesetzt werden soll oder ein User-Passwort abgefragt. Die Steckkarte startet anschließend das Betriebssystem, indem sie sukzessive die bootfähigen Laufwerke anspricht, wie es herkömmlicherweise direkt von dem BIOS durchgeführt wird.

Der Erfindung liegt der Gedanke zugrunde, durch eine zusätzliche Karte zwischen dem BIOS und dem Betriebssystem sicherheitsrelevante Funktionen durchzuführen, insbesondere das FREEZE-Kommando zu setzen. Hierdurch wird zunächst unabhängig von dem BIOS eine hohe Sicherheit erreicht, da bei jedem Booten die Ergänzungskarte (Erweiterungskarte, Einsteckkarte) angesprochen wird, bevor das Betriebssystem und spätere Anwendungsprogramme gestartet werden. Hierbei kann eine Verschlüsselung vorgesehen sein, so dass der Benutzer zur Freigabe zunächst die entsprechende Entschlüsselung durchzuführen hat, damit die Ergänzungskarte den Zugriff auf die gespeicherten Daten freigibt. Gemäß einer bevorzugten Ausführungsform kann die Ergänzungskarte bzw. das erfindungsgemäße Verfahren beim Hochfahren des Rechners lediglich den Schlüssel abfragen, den der Benutzer z. B. durch einen Wechseldatenträger, insbesondere eine Keycard, Diskette oder einen USB-Stick eingibt. Erst durch diesen Schlüssel kann das Kennwort mit dem UNLOCK-Befehl an die Festplatte übergeben werden. Ein Auslesen der Festplattendaten ist somit nur mit dem User-Passwort in Verbindung mit der Einsteckkarte und der Software möglich.

Das Master-Passwort ist vorteilhafterweise in der Ergänzungskarte fest einkompiliert. Das User-Passwort kann von dem Benutzer z. B. auch über ein LAN oder eine rechnerinterne Busverbindung, z. B. PCI-Busverbindung, eingegeben werden. Die Passwörter sind erfindungsgemäß vorteilhafterweise auf einem seriellen EEPROM der Einsteckkarte verschlüsselt gespeichert.

Vorzugsweise wird die erfindungsgemäße Ergänzungskarte bei jeder relevanten Festplatte, die durch Setzen von Passwörtern verschlüsselt werden kann, d.h. insbesondere jeder ATA oder SATA-Festplatte, aktiv und setzt den Freeze-Befehl und führt entsprechende Security-Befehle aus.

Eine erfindungsgemäße Wirkung ist es, dass durch ergänzende Maßnahmen unzulässige Änderungen an der Festplatte bzw. den Festplatten eines Rechners verhindert bzw. erschwert werden.

Erfindungsgemäß wird gemäß einer vorteilhaften Ausführungsform in dem Rechner eine Erweiterungskarte eingebracht, auf der ein Steuerchip montiert ist, der zwischen die Festplatte und den Festplatten-Controller gesteckt bzw. geschaltet wird.

Diese erfindungsgemäße Erweiterungskarte kann direkt auf die Festplatte gesteckt werden oder zur besseren Befestigung einen normalen Steckplatz im Rechner belegen. Bei Einsatz in einen PCI-Steckplatz kann der PCI-Anschluss direkt zur Stromversorgung dienen, ohne dass eine Datenübertragung über die PCI-Schnittstelle grundsätzlich erforderlich ist.

Der erfindungsgemäße Steuerchip wird von dem entsprechenden Festplatten-Controller bzw. den mehreren Festplatten-Controllern somit als Festplatte angesehen und wirkt gegenüber der Festplatte bzw. den angeschlossenen Festplatten wiederum als Festplatten-Controller. Der Steuerchip kann hierbei routinemäßige Datenübertragungen unbeeinflusst weitergeben, bei sicherheitsrelevanten Funktionen jedoch entsprechend einschreiten. Insbesondere kann der Steuerchip hierbei sicherheitsrelevante Zugriffe unter Verwendung des Security-Features-Sets blockieren.

Hierzu kann über einen Anschluss der Erweiterungskarte, z.B. einen USB-Anschluss oder auch eine Leseeinrichtung zum Lesen von Flash-Karten oder anderen beschreibbaren Datenträgern, die Eingabe des Schlüssels auf dem betreffenden Datenträger verlangt werden. Durch Eingabe des jeweiligen Datenträgers mit dem Schlüssel kann sich somit der jeweilige Benutzer authentisieren. Somit sind das Password und gegebenenfalls andere Datensätze auf dem karteninternen Speicher verschlüsselt gespeichert sein, wobei lediglich bei Eingabe des Schlüssels durch den Benutzer entsprechende Zugriffe auf die Festplatte erfolgen.

Die erfindungsgemäße Erweiterungskarte auch dieser Ausführungsform kann insbesondere jeweils den FREEZE-Modus setzen, so dass nachfolgend keine Änderung des Passwords bzw. der Passwörter auf der Festplatte erfolgen kann. Erst durch den vom Benutzer eingegebenen Schlüssel kann das Kennwort mit dem Unlock-Befehl an die Festplatte übergeben werden.

Erfindungsgemäß kann die Erweiterungskarte weiterhin bei mehreren angeschlossenen Festplatten eine Raid-Funktionalität durchführen. Diese Funktionalität kann in den Steuerchip integriert sein oder durch einen zusätzlich auf der Erweiterungskarte vorgesehenen weiteren Raid-Chip durchgeführt werden. Für die Verwaltung des Raids und die Verschlüsselung der Festplatten kann vorteilhafterweise eine eigene kleine CPU mit eigenem Arbeits- und Programmspeicher eingesetzt werden. Somit ist eine entsprechende Adressierung mehrerer angeschlossener Festplatten als gemeinsame Festplatte möglich, ohne dass der Benutzer die Unterteilung des Gesamtspeichers in mehrere Festplatten bemerkt.

Der erfindungsgemäße Steuerchip ist somit grundsätzlich ein vollwertiger Festplatten-Steuerchip. Vorteilhafterweise ist es auch möglich - mit Ausnahme des Future commands bzw. Security-Features-Sets - auch SCSI-Festplatten zu unterstützen, wenn diese entsprechend im Rechner angebracht werden.

Die Erfindung wird im Folgenden anhand der beiliegenden Zeichnungen an einigen Ausführungsformen erläutert. Es zeigen:
- Fig. 1: ein Blockdiagramm des Schichtensystems eines erfindungs-gemäßen Verfahrens unter Verwendung einer erfindungs-gemäßen Ergänzungskarte bzw. Rechnerkarte bzw. Steck-karte;
- Fig. 2: ein Blockdiagramm einer Ergänzungskarte bzw. Steckkarte gemäß einer ersten Ausführungsform mit Restore-Chip und Steuerchip;
- Fig. 3: ein Blockdiagramm einer Ergänzungskarte bzw. Steckkarte gemäß einer weiteren Ausführungsform zur Verwendung als Netzwerk- Ergänzungskarte mit Wake-on-LAN-Funktion;
- Fig. 4: ein Blockdiagramm einer Ergänzungskarte bzw. Steckkarte gemäß einer weiteren Ausführungsform, die gegenüber Fig. 3 zusätzlich eine Reset-Einrichtung zur Ausgabe eines Hard-Reset-Signals aufweist;
- Fig. 5: eine erfindungsgemäße Erweiterungskarte gemäß einer weiteren Ausführungsform zur Steuerung einer Festplatte;
- Fig. 6: eine Erweiterungskarte gemäß einer weiteren Ausführungs-form zur Steuerung von zwei Festplatten;
- Fig. 7: eine Erweiterungskarte gemäß einer weiteren Ausführungs-form mit Restore-Chip und LAN-Controller;
- Fig. 8: eine Festplatte gemäß einer weiteren Ausführungsform mit gegenüber Fig. 7 zusätzlicher Raid-Steuerung mehrerer Festplatten.

Ein erfindungsgemäßer Rechner 1, z.B. ein Desktop oder Notebook, weist unter anderem eine Festplatte 2 mit einem Festplatten-Controller 3 bzw. einer Festplatten-Steuereinrichtung 3 auf. Die Festplatte 2 wird hierbei mit einem security feature unter Verwendung eines security-Befehlssatzes gesteuert. Sie kann insbesondere eine ATA- oder SATA-Festplatte 2 sein. Der ATA- oder SATA-Befehlssatz weist hierbei ein Security-Mode-feature-Set mit mindestens folgenden Befehlen auf:
1. SECURITY SET PASSWORD, wodurch ein User-Password UP und ein Master-Password MP eingegeben werden und die Festplatte 2 automatisch beim nächsten Hochfahren, d.h. zumindest bei einem Kalt-Start, Password-geschützt bzw. verriegelt ist.
2. SECURITY UNLOCK, das zusammen mit dem korrekten User-Password eingegeben wird, entsperrt die Festplatte 2 vorübergehend, so dass mit ihr normal gearbeitet werden kann und ein Zugriff auf die Daten möglich ist. Die Sicherheitsfunktion bleibt jedoch aktiviert, so dass die Platte nach dem nächsten Kaltstart automatisch wieder verriegelt ist,
3. SECURITY DISABLE PASSWORD, wodurch der Security-Modus mit Password-Schutz wieder dauerhaft aufgehoben wird und der Rechner beim nachfolgenden Starten nicht mehr passwordgeschützt ist.
4. SECURITY FREEZE LOCK, wodurch sowohl im passwordgeschützten Modus als auch im ungeschützten Modus ein Setzen des Passwords und/oder eine Veränderung des Passwords verhindert wird bis zum nächsten Kaltstart des Rechners, bei dem der Freeze-Modus zunächst nicht gesetzt ist. Im Freeze-Modus ist ein normaler Betrieb möglich, wobei Frozen Mode-Befehle verfügbar sind,
5. SECURITY ERASE PREPARE und SECURITY ERASE UNIT, wodurch der Password-Modus gelöscht wird und somit auch beim nächsten Starten des Rechners nicht mehr gesetzt ist. Die Erase-Funktionen erfolgt durch Eingabe des Master-Passwords. Hierbei kann z.B. zwischen einer High- und einer Maximum-Sicherheitsstufe differenziert werden, wobei in der High-Sicherheitsstufe die Erase-Funktion durch das Master-Password zur Entsperrung und zum nachfolgenden Zugriff auf die Daten führt und in der Maximum-Sicherheitsstufe bei Entsperren durch das Master-Password sämtliche Daten gelöscht werden.

Vorteilhafterweise wird das Master-Password bei der Herstellung auf einen spezifischen Wert gesetzt und kann nachfolgend durch den entsprechenden Security Set Password Befehl geändert werden.

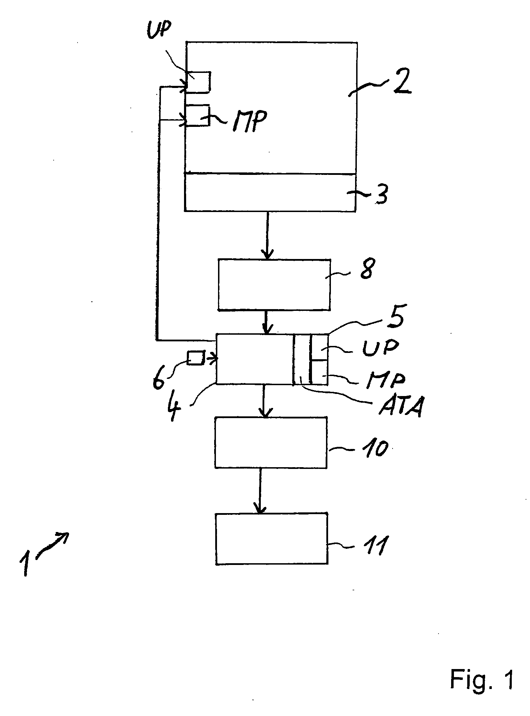

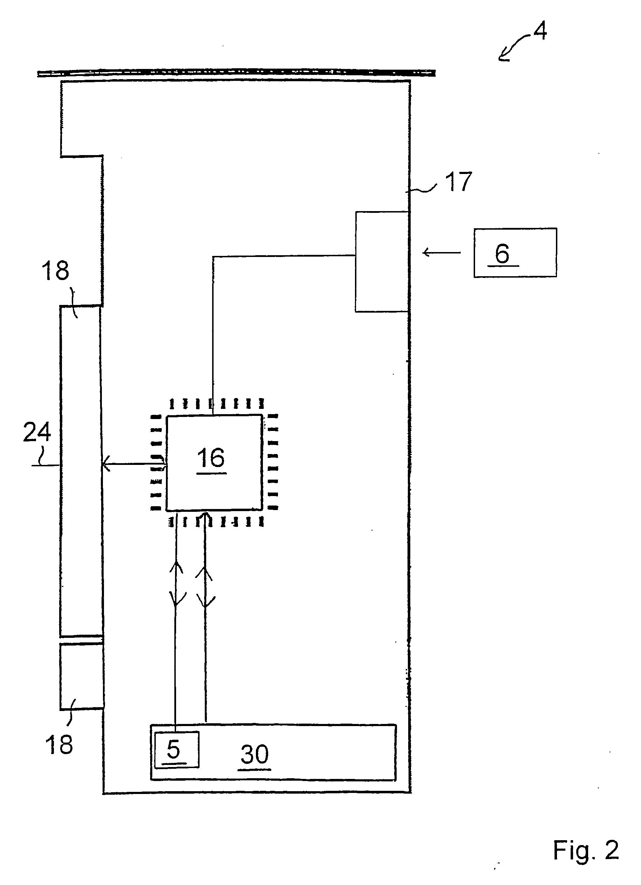

Gemäß Fig. 1 wird beim Hochfahren des Rechners zunächst das BIOS geladen, das auf den ATA-Befehlssatz zurückgreifen kann. Erfindungsgemäß ist es hierbei nicht erforderlich, dass das BIOS das User-Password abfragt. Das BIOS wird erfindungsgemäß derartig eingestellt, dass es nachfolgend als bootfähiges Laufwerk zunächst die erfindungsgemäße Einsteckkarte 4 aufruft. Die Einsteckkarte 4 kann gemäß den beispielhaften Ausführungen der Fig. 2, 3 und 4 mit unterschiedlichen Funktionen ausgestattet sein. Auf ihre sind jedoch jedes Mal der ATA- bzw. SATA-Befehlssatz der Festplatte 1 mit dem security feature set gespeichert, mit dem sie Sicherheitsfunktionen bzw. Security-Funktionen durchführt.

Erfindungsgemäß führt die Einsteckkarte 4 z.B. die Freeze-Funktion durch, so dass nachfolgend keine Veränderungen des User-Passwords oder auch des Master-Passwords durchgeführt werden können. Vorteilhafterweise fragt die Einsteckkarte 4 weiterhin das User-Password UP ab, das in ihr gespeichert ist. Gemäß einer bevorzugten Ausführungsform sind das User-Password UP sowie auch das Master-Password MP hierbei in der Einsteckkarte 4 verschlüsselt in einem EPROM 5 gespeichert. Der Schlüssel für die Entschlüsselung kann auf der Einsteckkarte 4 selbst gespeichert sein; vorteilhafterweise wird ist Schlüssel jedoch auf einem vom Benutzer eingeführten Wechseldatenträger 6 vorgesehen, z.B. einer Flash-Karte oder einem USB-Stick, die bzw. der in ein entsprechendes Laufwerk in der Einsteckkarte 4 eingesteckt wird.

Die Einsteckkarte 4 startet nach Durchführung ihrer Sicherheitsfunktionen nachfolgend das Betriebssystem 10, d.h. es werden vom Rechner in gewohnter Weise zunächst bootfähige Laufwerke und nachfolgend der Bootsektor auf der Festplatte 2 aufgerufen. Auf dem Betriebssystem 10 laufen nachfolgend entsprechende Anwendungen bzw. Anwendungsprogramme 11, die in ungewollter Weise auch unzulässige Funktionen durchführen können; hierbei können z.B. bei Viren, Würmern, Trojanische Pferden oder andere selbstkopierende oder sich selbst installierende Programmen aktiv sein, die gegebenenfalls Zugriff auf die Festplatte 2 suchen und hier Daten dauerhaft löschen oder verändern wollen.

Falls in einem Anwendungsprogramm 11 - z.B. auch Online über das Internet - ein unerlaubter Zugriff auf das User-Password UP oder das Mater-Password MP auf der Festplatte 1 erfolgen soll, wird dieser Zugriff aufgrund des gesetzten Freeze-Modus jeweils verhindert. Falls der Rechner abstürzt oder anderweitig betriebsunfähig wird, wird nach einem nachfolgenden Kalt-start wiederum zunächst über die Einsteckkarte 4 der Freeze-Modus gesetzt, so dass eine Änderung des Master-Passwords oder User-Passwords nicht möglich ist.

Die Figuren 2 bis 4 zeigen unterschiedliche zusätzliche Funktionen der Einsteckkarte 4.

Fig. 2 zeigt zunächst eine einfache Ausführungsform mit einem auf einer Platine 17 montierten Steuerchip 16, z.B. einem PCI-Chip 16 zur Steuerung einer PCI-Schittstelle 18 für eine Kommunikation über einen PCI-Bus 24.

Weiterhin ist auf der Einsteckkarte 4 eine Restore-Chip 30 angebracht, auf dem das EEPROM 5 zur Speicherung des verschlüsselten User-Passwords UP und des verschlüsselten Master-Passwords MP sowie des ATA- oder SATA-Befehlssatzes vorgesehen ist.

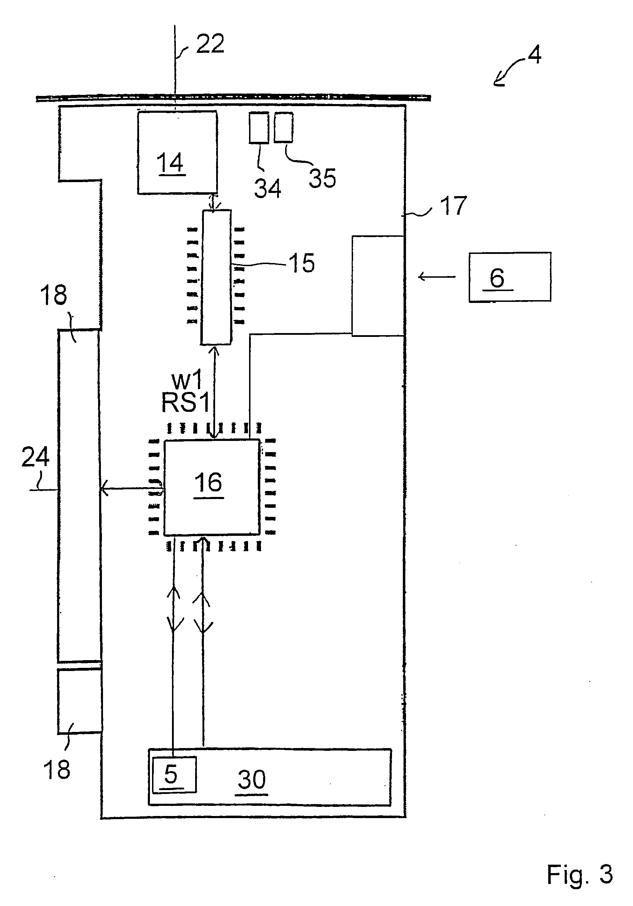

Bei der Ausführungsform der Fig. 3 ist der Steuerchip 16 als LAN-Steuerchip 16 ausgebildet, der sowohl eine Datenverbindung über die PCI-Schnittstelle 18 und den PCI-Bus 24 als auch über den LAN-Transceiver 15 und den LAN-Anschluss 14 und eine Datenleitung 22, z.B. eine Telefonleitung 22 (oder auch eine drahtlose Datenverbindung) ermöglicht. Hierbei sind ergänzend Statusanzeigen 34, 35 vorgesehen. Ein Rechner mit einer Hauptplatine bzw. Motherboard und der erfindungsgemäßen Ansteckkarte 4 kann somit mit anderen Rechner ein LAN bilden. Die Datenverbindung kann z.B. über die Telefonleitung 22 und gegebenenfalls einen Router erfolgen. Neben Sternverbindungen sind grundsätzlich auch Bussysteme möglich. Wenn dem LAN-Steuerchip 6 über die LAN-Anschlusseinrichtung 4 und den LAN-Trancesiver 15 ein Wake-on-LAN-Eingangssignal W1 zugeführt wird, gibt er ein Wake-on-LAN-Ausgangssignal W2 über die Wake-on-LAN-Anschlusseinrichtung 31 und die Wake-on-LAN-Leitung 25 an z.B. ein Netzgerät des Rechners aus, durch das dieser von einem Schlafzustand in den Betriebsmodus überführbar ist.

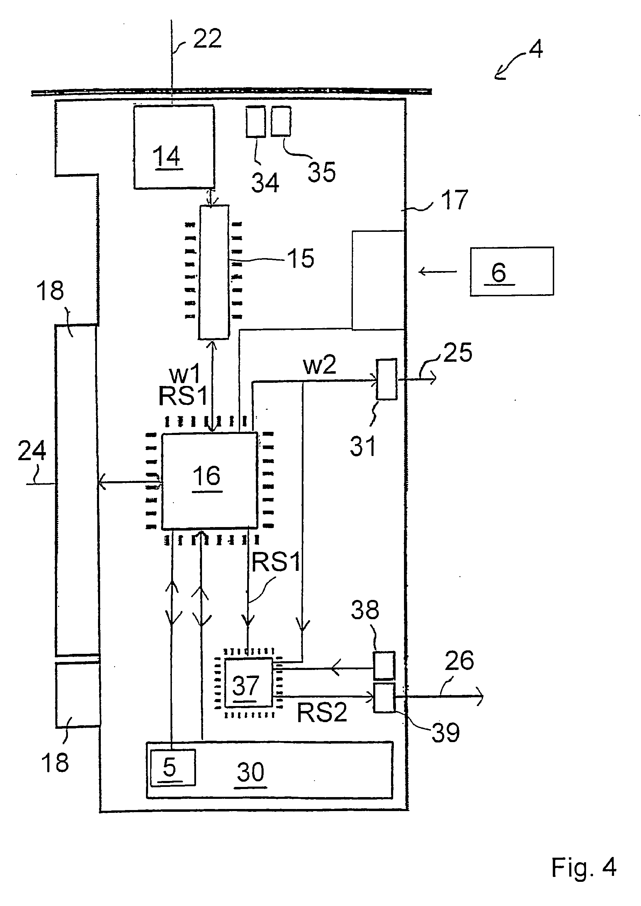

Gemäß der Ausführungsform der Fig. 4 ist weiterhin ein Reset-Chip 37 vorgesehen, der z.B. als DSP (Digitaler Signal Prozessor) ausgebildet sein. Der Reset-Chip 37 kann über die LAN-Anschlusseinrichtung 14 ein Hard-Reset-Eingangssignal RS1 und weiterhin von einem Reset-Taster 38 ein Signal aufnehmen, und gibt über eine Reset-Ausgangseinrichtung 39 und eine eigene Hard-Reset-Leitung 26, z.B. eine twisted-pair-Leitung, ein Hard-Reset-Ausgangssignal RS2 an die Hauptplatine des Rechners aus.

Das Hard-Reset-Eingangssignal RS1 kann hierbei über den LAN-Transceiver 15 direkt zu dem Reset-Chip 37 oder aber - wie in Fig. 4 gezeigt - über den LAN-Steuerchip 16 zu dem Reset-Chip 37 geführt werden.

Bei den gezeigten Ausführungsformen kann der Restore-Chip 30 irreversible Änderungen der gespeicherten Systemdateien des Betriebssystems verhindern. Wenn von einem Programm Änderungen von Systemdateien eingegeben werden, gibt der Restore-Chip nach der physikalischen Speicherung der neuen Systemdateien und der Zuweisung der Adressen zu diesen neuen Systemdateien erst eine Anfrage an den Benutzer aus, ob die Änderungen gewünscht sind. Erst nach einer Bestätigung, dass die neuen Systemdateien anstelle der bisherigen Systemdateien verwendet werden sollen, werden sie übernommen, indem den gespeicherten Daten die Adressen der Systemdateien zugeordnet werden. Der Restore-Chip 30 - ist vorteilhafterweise über den LAN-Steuerchip 16 mit der PCI-Schnittstelle 18 der Einsteckkarte bzw. Netzwerkkarte 4 verbunden, über die der Anschluss an den PCI-Bus 24 des Rechners erfolgt. Die Einsteckkarte 4 ist hierbei in an sich bekannter Weise mit der als Steckleiste ausgebildeten PCI-Schnittstelle 18 in die Hauptplatine des Rechners gesteckt.

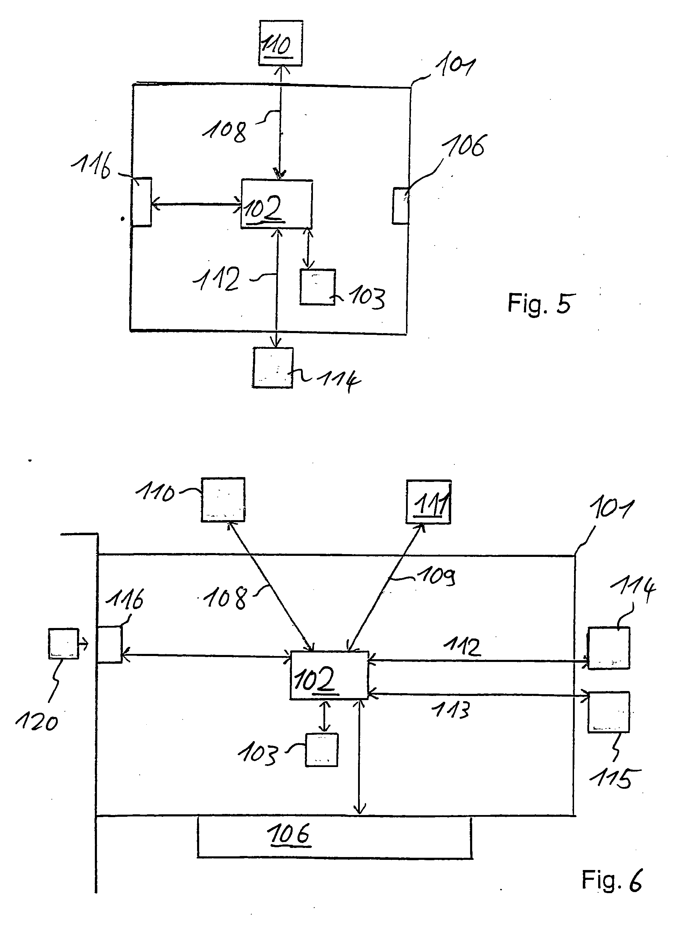

Fig. 5 zeigt als Blockdiagramm den grundsätzlichen Aufbau einer weiteren erfindungsgemäßen Erweiterungskarte 101, die vorzugsweise als Steckkarte 101 ausgebildet ist. Sie weist einen Steuerchip 102 und einen Speicherchip 103, vorzugsweise ein EEPROM, auf und wird gemäß der gezeigten Ausführungsform in an sich bekannter Weise in einen Rechner eingesetzt, d.h. mit einer als Steckleiste ausgebildeten PCI-Schnittstelle 106 in die Hauptplatine bzw. das Mainbord des Rechners gesteckt. Die Stromversorgung kann über die PCI-Schnittstelle 106 erfolgen, ohne dass grundsätzlich ein Busanschluss bzw. Datenanschluss über die PCI-Schnittstelle 106 erforderlich ist. Somit dient die in Fig. 6 gezeigte PCI-Schnittstelle 106 erfindungsgemäß zunächst lediglich der Stromversorgung.

Der Steuerchip 102 ist über eine erste Leitung 8 mit zumindest einer ersten Festplatte 110, gemäß der Ausführungsform der Fig. 6 entsprechend auch über eine Leitung 109 mit einer zweiten Festplatte 111 verbunden. Weiterhin ist der Steuerchip 102 über eine weitere Leitung 112 mit einem Festplatten-Controller 114 verbunden, der zur Steuerung der Festplatte 110 z.B. in an sich bekannter Weise auf der Hauptplatine 104 vorgesehen ist.

Ergänzend können - wie weiter unten beschrieben wird - periphere Geräte über eine Schnittstelle der Erweiterungskarte 1, z.B. einen USB-Anschluss 116 angesteuert werden.

Bei der Ausführungsform der Fig. 6 werden zwei Festplatten 110, 111 von dem Steuerchip 102 über Leitungen 108, 109 angesteuert. Entsprechend ist der Steuerchip 102 über Leitungen 112, 113 mit zwei Festplatten- Controllern 114, 115, die auf der Hauptplatine 104 angebracht sind, verbunden.

Die Festplatte 110, bzw. die Festplatten 110, 111 werden hierbei mit einem security feature unter Verwendung eines security-Befehlssatzes gesteuert. Die Festplatten 110, 111 können insbesondere ATA-, d.h. IDE- oder SATA-Festplatten 110, 111 sein. Der ATA- oder SATA-Befehlssatz weist hierbei ein Security-Mode-feature-Set mit mindestens den Befehlen SECURITY SET PASSWORD, SECURITY UNLOCK, SECURITY DISABLE PASSWORD, SECURITY FREEZE LOCK, SECURITY ERASE PREPARE und SECURITY ERASE UNIT, wie sie bereits bei der ersten Ausführungsform der Figuren 1 bis 4 beschrieben wurden, hier entsprechend für die Festplatten 110 bzw. 110 und 111.

Auf dem EEPROM 103 sind der ATA- bzw. SATA-Befehlssatz der Festplatte 110, 111 mit dem Security-Features-Set gespeichert, mit dem der Steuerchip 102 die Sicherheitsfunktionen bzw. Security-Funktionen durchführt.

Somit kann die Erweiterungskarte 101 die FREEZE-Funktion durchführen, so dass nachfolgend keine Veränderungen des User-Passwords oder auch des Master-Passwords durchgeführt werden können. Vorteilhafterweise fragt die Erweiterungskarte101 weiterhin das gespeicherte User-Password UP ab. Hierbei können das User-Password UP und das Master-Password MP auf dem EEPROM 0 verschlüsselt gespeichert sein. Der Schlüssel für die Entschlüsselung kann auf der Erweiterungskarte 101 selbst gespeichert sein. Vorteilhafterweise wird der Schlüssel jedoch auf einem vom Benutzer eingeführten Wechseldatenträger 120 vorgesehen, z.B. einer Flash-Karte 120 oder einem USB-Stick 120, der in ein entsprechendes Laufwerk der Erweiterungskarte 101, z.B. den USB-Anschluss 116 oder eine entsprechende Flash-Kartenaufnahme eingesteckt wird. Über den USB-Anschluss 116 bzw. den Kartenleseanschluss ist erfindungsgemäß somit eine Hardware-Authentisierung mittels des auf dem Wechseldatenträger 120 gespeicherten Schlüssels möglich.

Falls in einem Anwendungsprogramm, z.B. auch online über das Internet, ein unerlaubter Zugriff auf das User-Password UP oder das Master-Password MP auf einer der Festplatten 111, 112 erfolgen soll, wird dieser Zugriff aufgrund des gesetzten FREEZE-Modus jeweils verhindert.

Da die erfindungsgemäße Erweiterungskarte 101 zwischen die jeweiligen Festplatten 110 bzw. 110, 111 und deren Festplatten-Controller 114 bzw. 114 und 115 geschaltet ist, kann sie beim Zugriff auf die Festplatte 110 bzw. Festplatten 110, 111 nicht umgangen werden. Die Festplatten-Controller 114, 115 können grundsätzlich auch auf den Festplatten 110, 111 selbst angeordnet sein. Die Festplatten können z.B. IDE- oder SATA-Festplatten 110, 111 sein.

Auch das in dem Rechner installierte BIOS greift über die Festplatten-Controller 114 bzw. 114 und 115 auf die Festplatte 110 bzw. 110 und 111 zurück; entsprechend auch das auf dem BIOS laufende Betriebssystem und die auf dem Betriebssystem laufenden Anwendungsprogramme, in denen z.B. Viren, Würmer, Trojanische Pferde oder andere selbst kopierende oder sich selbst installierende Programme aktiv sein können, die gegebenenfalls Zugriff auf die Festplatten 110, 111 suchen und hier Daten dauerhaft löschen oder verändern wollen.

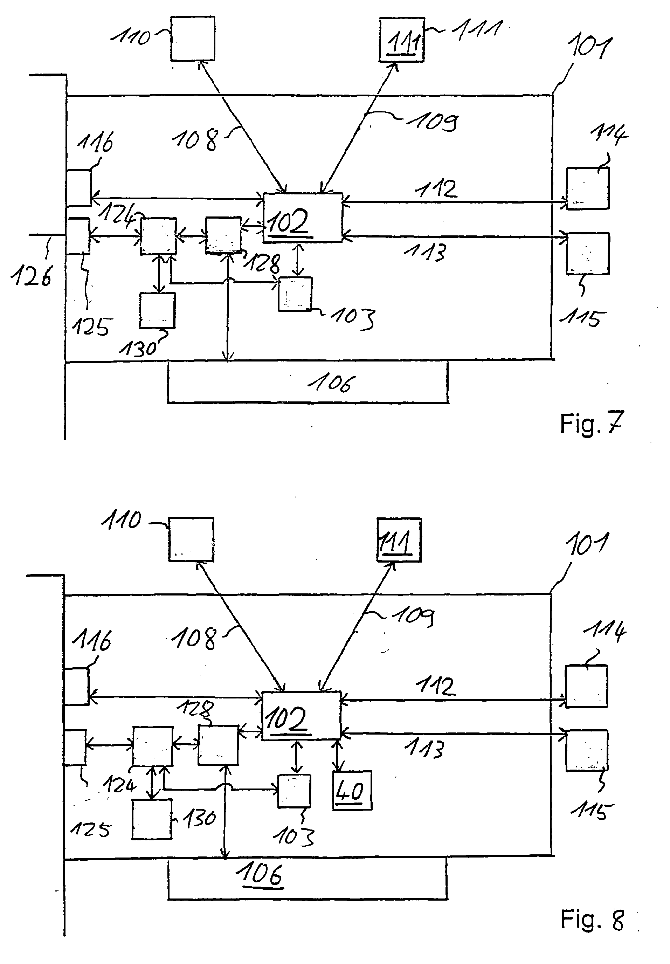

Bei der Ausführungsform der Fig. 7 ist auf der Erweiterungskarte 101 zusätzlich ein LAN-Controller 124 zur Steuerung eines LAN-Anschlusses 125 vorgesehen. Weiterhin wird die PCI-Schnittstelle 106 nicht nur zur Stromversorgung, sondern auch zur Datenübertragung verwendet; hierbei ist ein PCI-Controller 128 zur Steuerung des Datenverkehrs über die PCI-Schnittstelle 106 und den rechnerinternen PCI-Bus vorgesehen. Der PCI-Controller 128 kann grundsätzlich mit dem Steuerchip 102 integriert ausgebildet sein, d.h. dass der Steuerchip 102 auch die PCI-Steuerung mit übernimmt. Vorteilhafterweise ist jedoch gemäß Fig. 7 ein separater Chip als PCI-Controller 128 auf der Erweiterungskarte 101 montiert. Über den PCI-Bus, die PCI-Schnittstelle 106 und den PCI-Controller 128 kann somit eine Datenübertragung über den LAN-Controller 124 und das LAN erfolgen. Hierbei ist ein Restore-Chip 130 auf der Erweiterungskarte 101 montiert und mit dem LAN-Controller 124 verbunden.

Bei dieser Ausführungsform kann der Rechner mit seiner Erweiterungskarte 101 somit mit anderen Rechnern über die LAN-Leitung 126, z.B. eine Telefonleitung oder auch eine drahtlose Datenverbindung, ein LAN bilden. Die Datenverbindung kann entsprechend über einen Router erfolgen. Hierbei sind neben Sternverbindungen grundsätzlich auch Bussysteme möglich.

Wenn dem LAN-Controller 124 über den LAN-Anschluss 125 ein Wake-on-LAN-Eingangssignal zugeführt wird, gibt er ― direkt oder über eine von ihm angesteuerte Anschlusseinrichtung ― ein Wake-on-LAN-Ausgangssignal über eine separate Wake-on-LAN-Leitung an z. B. ein Netzgerät des Rechners aus, durch das dieser von einem Schlafzustand in einen Betriebsmodus überführbar ist.

Der Restore-Chip 130 dient dazu, irreversible Änderungen der gespeicherten Systemdateien des Betriebssystems zu verhindern. Wenn von einem Programm Änderungen von Systemdateien eingegeben werden, gibt der Restore-Chip nach der physikalischen Speicherung der neuen Systemdateien und der Zuweisung der Adressen zu diesen neuen Systemdateien erst eine Anfrage an den Benutzer aus, ob die Änderungen gewünscht sind. Erst nach einer Bestätigung, dass die neuen Systemdateien anstelle der bisherigen Systemdateien verwendet werden sollen, werden sie übernommen, indem den gespeicherten Daten die Adressen der Systemdateien zugeordnet werden. Der Restore-Chip 130 ― ist vorteilhafterweise über den LAN- Steuerchip 124 mit der PCI-Schnittstelle 106 der Erweiterungskarte 101 bzw. Netzwerkkarte 101 verbunden, über die der Anschluss an den PCI-Bus des Rechners erfolgt.

Fig. 8 zeigt eine weitere Ausführungsform, bei der die Festplatten 110, 111, gegebenenfalls auch weitere Festplatten, als Raid konfiguriert werden können. Hierzu ist ein Raid-Encrypt-Decrypt-Chip 140 auf der Erweiterungskarte 101 vorgesehen, der die angeschlossenen Festplatten 110, 111 als ein Gesamtspeicher von z.B. 1 Terabyte Speicherkapazität gemeinsam adressiert.

Die Ausführungsformen der Fig. 1 bis 8 können hierbei erfindungsgemäß kombiniert werden, so dass einzelne Merkmale einer oder mehrerer Ausführungsformen auch bei einer weiteren oder mehreren weiteren Ausführungsformen verwirklicht werden.

## Patentansprüche

1. Ergänzungskarte für einen Rechner (1), der mindestens eine Festplatte (2) und ein BIOS (8) zur Aufnahme eines Betriebssystems (10) aufweist,
wobei die Festplatte (2) durch ein Security-Feature geschützt ist, das Zugriffsbeschränkungen für die Anwendungsprogramme aufweist,
**dadurch gekennzeichnet, dass**
auf der Ergänzungskarte (4) zumindest das User-Passwort (UP) und zumindest einige Security-Befehle des Security-Features gespeichert sind,
die Ergänzungskarte (4) beim Starten des Rechners nach dem BIOS (8) und vor dem Betriebssystem (10) aufgerufen wird, und
die Ergänzungskarte (4) nach dem BIOS (8) Security-Befehle ausführt und mindestens einen Freeze-Befehl setzt, der Änderungen und/oder ein Setzen zumindest des User-Passwords (UP) durch das Betriebssystem (10) oder ein auf dem Betriebssystem laufendes Anwendungsprogramm verhindert.

2. Ergänzungskarte nach Anspruch 1, **dadurch gekennzeichnet, dass** auf der Ergänzungskarte (4) auch das Master-Password (MP) gespeichert ist.

3. Ergänzungskarte nach Anspruch 1 oder 2, **dadurch gekennzeichnet, dass** das mindestens eine Passwort (UP, MP) auf der Ergänzungskarte verschlüsselt gespeichert ist.

4. Ergänzungskarte nach Anspruch 3, **dadurch gekennzeichnet, dass** sie eine Leseeinrichtung (50) für einen Wechseldatenträger (52), z. B. eine Flash-Karte oder einen USB-Stick, aufweist, und ein Schlüssel zum Entschlüsseln des mindestens einen gespeicherten Passwortes (UP, MP) von der Ergänzungskarte (4) über die Leseeinrichtung (50) aus dem eingeführten Wechseldatenträger (52) ausgelesen wird.

5. Ergänzungskarte nach einem der vorhergehenden Ansprüche, **dadurch gekennzeichnet, dass** auf ihr der komplette Befehlssatz (ATA, SATA) zur Steuerung der Festplatte (2) gespeichert ist.

6. Ergänzungskarte nach Anspruch 5, **dadurch gekennzeichnet, dass** der Befehlssatz ein ATA- oder SATA-Befehlssatz ist.

7. Ergänzungskarte nach einem der vorhergehenden Ansprüche, **dadurch gekennzeichnet, dass** sie einen löschbaren speicherbaren Nur-Lese-Speicher bzw. EPROM zur Speicherung des mindestens einen Passworts (UP, MP) und ggf. des Security-Befehlssatzes aufweist.

8. Ergänzungskarte nach einem der vorhergehenden Ansprüche, **dadurch gekennzeichnet, dass** sie eine Recovery-Funktion aufweist.

9. Ergänzungskarte nach einem der vorhergehenden Ansprüche, **dadurch gekennzeichnet, dass** in ihr einstellbar ist, ob bei einem Boot-Vorgang des Rechners ein User-Passwort abgefragt wird oder nicht.

10. Ergänzungskarte nach einem der vorhergehenden Ansprüche, **dadurch gekennzeichnet, dass** sie auf jeder in dem Rechner vorgesehenen, durch ein Passwort sperrbaren Festplatte Security-Befehle ausführt und mindestens den Freeze-Befehl setzt.

11. Ergänzungskarte nach einem der vorhergehenden Ansprüche, **dadurch gekennzeichnet, dass**
auf der Erweiterungskarte (101) ein Steuerchip (102) angebracht ist, der zwischen die Festplatte (110,111) des Rechners (101) und den Festplatten-Controller (114, 115) zur Steuerung der Festplatte (110,111) des Rechners (101) geschaltet ist.

12. Erweiterungskarte nach einem der vorhergehenden Ansprüche, **dadurch gekennzeichnet, dass** auf ihr eine Raid-Encrypt-Decrypt - Einrichtung (140) vorgesehen ist, die mehrere angeschlossene Festplatten (110, 111) gemeinsam adressiert.

13. Ergänzungskarte nach einem der vorhergehenden Ansprüche, **dadurch gekennzeichnet, dass** sie eine Wake-on-LAN-Funktion aufweist.

14. Erweiterungskarte nach einem der vorhergehenden Ansprüche, **dadurch gekennzeichnet, dass** sie als Steckkarte (4, 101) zum Einsetzen in einen Steckplatz des Rechners ausgebildet ist und über eine Steck- Schnittstelle (106) eines rechnerinternen Bussystems mit Strom versorgt wird.

15. Erweiterungskarte nach Anspruch 13 und Anspruch 14, **dadurch gekennzeichnet, dass** sie einen LAN-Anschluss (25, 125) aufweist und bei Aufnahme eines Wake-on-LAN-Eingangssignals über den LAN-Anschluss (25, 125) ein Wake-on-LAN-Ausgangssignal über eine separate Wake-on-LAN-Leitung ausgibt, durch das dieser von einem Schlafzustand in einen Betriebsmodus überführbar ist.

16. Verfahren zum gesicherten Starten eines Rechners, mit mindestens folgenden Schritten:
Starten eines BIOS (8),
nachfolgendes Starten eines auf einer Ergänzungskarte (4) vorgesehenen Sicherheitsverfahrens, bei dem Security-Befehle eines Security-Features des Befehlssatzes der Festplatte (ATA, SATA) durchgeführt werden, wobei zumindest ein FREEZE-Befehl gesetzt wird, durch den verhindert wird, dass bei einem nachfolgend geladenen Betriebssystem und/oder einem auf dem Betriebssystem laufenden Anwendungsprogramm ein auf der Festplatte gespeichertes User-Password (UP) des Security-Features durch das Betriebssystem (10) oder ein auf dem Betriebssystem laufendes Anwendungsprogramm geändert und/oder gesetzt wird.

17. Verfahren nach Anspruch 16, **dadurch gekennzeichnet, dass** die Security-Befehle auf jeder in dem Rechner vorgesehenen, durch ein Passwort sperrbaren Festplatte ausgeführt werden, und jeweils mindestens der Freeze-Befehl gesetzt wird.
